Europäisches Patentamt

European Patent Office

Office européen des brevets

(11) Publication number: **0 099 127**
**B1**

(12) **EUROPEAN PATENT SPECIFICATION**

(45) Date of publication of patent specification: **23.11.89**

(51) Int. Cl.⁴: **G 11 B 5/00**, G 11 B 5/33, G 11 B 5/62, G 11 B 5/127

(21) Application number: **83106921.6**

(22) Date of filing: **14.07.83**

(60) Divisional application 83111439 filed on 15.11.83.

(54) Magnetic reproducing system.

(30) Priority: **16.07.82 JP 122942/82**
**16.07.82 JP 122943/82**
**09.11.82 JP 196377/82**
**18.11.82 JP 202283/82**

(43) Date of publication of application:
**25.01.84 Bulletin 84/04**

(45) Publication of the grant of the patent:
**23.11.89 Bulletin 89/47**

(84) Designated Contracting States:
**DE FR GB NL**

(56) References cited:
EP-A-0 045 966
DE-B-1 173 533
FR-A-1 153 607
GB-A-1 159 987
US-A-2 952 503
US-A-3 387 100
US-A-3 454 727
INTERNATIONAL CONFERENCE ON
NONLINEAR MAGNETICS, Washington, D.C.,
6th-7th-8th April 1964, pages 3-4-1 - 3-4-7, IEEE,
New York, US; P.SMALLER: "A flux sensitive
reproduce head of thin film construction"

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Sawazaki, Norikazu**
**2-31-27 Fujizuka Kohoku-ku**
**Yokohama-shi (JP)**

(74) Representative: **Blumbach Weser Bergen**
**Kramer Zwirner Hoffmann Patentanwälte**
**Radeckestrasse 43**
**D-8000 München 60 (DE)**

(56) References cited:
PATENTS ABSTRACTS OF JAPAN, vol. 6, no.
221 (P-153)1099r 5th November 1982; & JP - A -
57 123 504
PATENTS ABSTRACTS OF JAPAN, vol. 7, no.
130 (P-202)1275r, 7th June 1983; & JP - A - 58
48 203
PATENTS ABSTRACTS OF JAPAN, vol. 7, no.
160 (P-210)1305r, 14th July 1983; & JP - A - 58
68 205

Courier Press, Leamington Spa, England.

## Description

This invention generally relates to a magnetic reproducing system and, more particularly, to a magnetic reproducing system which permits high density recording and reproduction of signals.

Heretofore, the magnetic recording and reproducing apparatus has been used most extensively for an electric signal recording and reproducing system, for instance, for magnetic disc, magnetic drum and magnetic tape recorders used for audio tape recorders, video tape recorders and computer data processing systems.

Such a magnetic recording and reproducing system uses a reproducing head with a ring core. The tip of the head is held in contact with a running magnetic recording medium, and an electromotive force induced in a coil wound on the ring core according to a change in a recorded magnetic field is taken out as a reproduced output. In order to be able to obtain a sufficiently large reproduced output with a satisfactory signal-to-noise ratio, it is necessary to produce a sufficiently high intensity magnetic field in the magnetic recording medium. Therefore, a wide recording track is necessary, which is undesirable from the standpoint of the high density recording of signals.

The document EP—A—0045966 discloses a magnetic reproducing system according to the prior art portion of claims 1 and 2. This prior art discloses a magnetic head having a magnetic body of magnetic material that changes its high frequency characteristics with changes of a magnetic field it is exposed to, namely the magnetic field recorded on a magnetic tape. This known system comprises a high frequency coupling circuit consisting of a tuned circuit comprising a coil wound around the magnetic body and a capacitor. With changes of the high frequency characteristics of the magnetic body, the inductance of the coil is changed and consequently the coupling degree of the high frequency coupling circuit is changed. The resulting modulation of the high frequency signal from an oscillator driving the high frequency coupling circuit is then reproduced with a peak detector.

The document US—A—3 387 100 discloses means of recording and reading microwave energy by utilizing a radiation magnetization effect similar to magnetization of a ferromagnetic material. This magnetized stage to be obtained in the recording medium occurs in certain ferrites after a radiation of the ferrite with a high power high frequency standing wave and with the ferrite in a region of maximum magnetic field strength. The strength of this effect for observation purposes depends upon the change in the microwave transmission characteristics of low power reproduction as compared with the transmission characteristics of the ferrite in its unmagnetized state. The known system uses a moving ferrite disk as the recording medium. A tapered waveguide recording head has a slot through which an edge of the ferrite disk passes. A read-out head of a construction which may be identical to that of the recording head has its output end connected to one of the balanced arms of a low power microwave bridge. A change in the microwave transmission characteristics of the magnetized disk region being read out causes the microwave bridge to become unbalanced. The degree of imbalance can be determined by suitable electronic means so that the strength or intensity of the recorded microwave signals can be determined.

An object of the invention is to provide a magnetic reproducing system which permits reliable reproduction of high density recording.

This object is achieved with a magnetic reproducing system as claimed in claim 1.

Other embodiments of this system are subject of EP—A—105531.

This invention can be more fully understood from the following detailed description when taken in conjunction with the accompanying drawings, in which:

Fig. 1 is a schematic view showing one embodiment of the invention;

Figs. 2 through 5 are schematic views showing further embodiments;

Fig. 6 is a view illustrating the principles underlying the embodiment of Fig. 5;

Fig. 7 is a graph illustrating the reproducing characteristic of the embodiment of Fig. 5; and

Fig. 8 is a schematic view showing still a further embodiment.

The invention will now be described in conjunction with some preferred embodiments thereof with reference to the drawings.

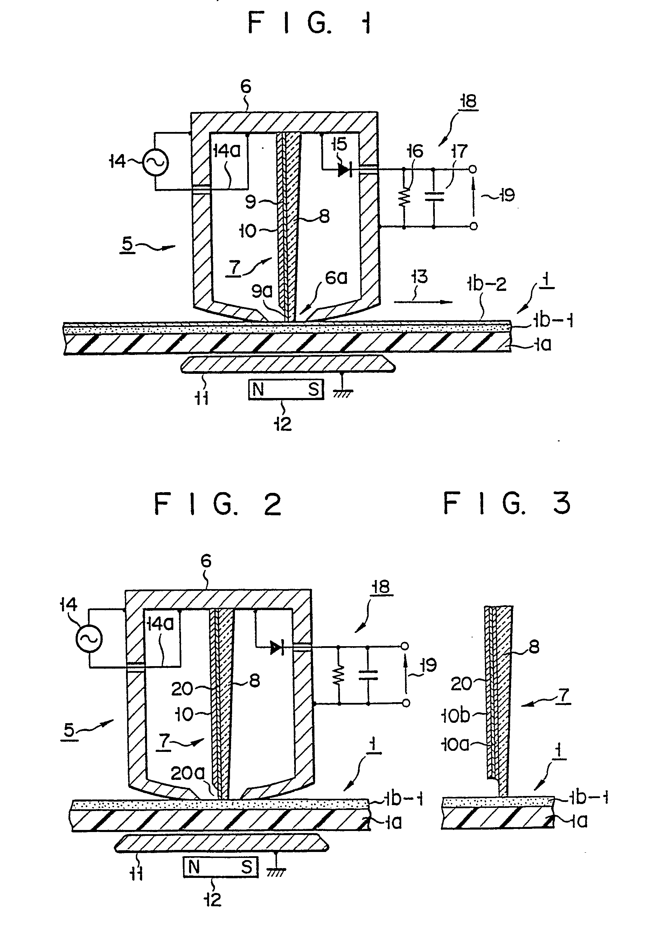

Referring to Fig. 1, there is shown one embodiment of the invention, which uses a magnetic tape 1 which has a synthetic resin film base 1a, and a magnetic recording film 1b-1 and a magnetic layer 1b-2 are successively formed on one side of the base 1a. In this instance, the magnetic film 1b-1 is suited for vertical magnetization recording, and consists of a magnetic material such as barium ferrite, cobalt-chrome and the like which is magnetizable by vertical magnetization.

The magnetic layer 1b-2 is made of a magnetic material such as yttrium iron garnet (YIG) or Permalloy (Ni-Fe), whose magnetic permeability $\mu$ is variable according to a high frequency magnetic field, coated on the film 1b-1 with a thickness of 200 Å to 2000 Å=(0,02—0,2 µm). When the YIG is used, the layer 1b-2 may be formed by coating powdered YIG on the film 1b-1. In the case of Permalloy, it is possible to form the layer 1b-2 by sputtering the Permalloy.

A reproducing head 5 is constituted by a cylindrical outer conductor 6 and a stylus electrode 7 as an inner conductor. The stylus electrode 7 has a stylus base 8 of glass and a tungsten film 9 which is 0.1 to 0.3 µm thick formed on one side of the stylus base 8. A conductive film 10, for instance a copper film, is formed on a portion of the tungsten film 9 other than a tip portion 9a thereof to reduce the frequency loss in the former portion. The tip of the stylus electrode 7 projects from an open end 6a of the outer conductor 6 and is in contact with the surface of the magnetic layer 1b-2 of the tape 1.

A conductor 11 serving as a grounding plate is provided on the side of the tape 1 opposite to the outer conductor 6 and stylus electrode 7. A permanent magnet 12 (or an electromagnet) may be provided, if necessary, on the side of the conductor 11 opposite the tape 1. The outer conductor 6, stylus electrode 7 and conductor 11 constitute a high frequency resonant circuit in the reproducing head 5 with a resonant current path thereof extending in the direction of thickness of the tape 1.

For reproducing signals recorded on the tape 1, the reproducing head 5 is moved relative to the tape 1 in the direction of arrow 13. High frequency energy in a microwave band, for instance from about 500 MHz to about 1,000 MHz, is supplied from a high frequency oscillator 14 to the high frequency resonant circuit, i.e., coaxial resonator, through a coupling coil 14a. The high frequency characteristics of the magnetic layer 1b-2 such as high frequency loss or magnetic permeability thereof are varied according to the signal field from the tape 1. Furthermore, utilization of the magnetic resonance of the magnetic material that arises from the relation between the applied high frequency energy and magnetic field permits great changes in the high frequency characteristics of the magnetic material to be obtained for utility. The high frequency voltage from the high frequency resonant circuit is modulated by the changes in either of the two high frequency characteristics. The changes in the high frequency voltage are detected by a peak detecting circuit 18 including a diode 15, a resistor 16 and a capacitor 17, whereby a reproduced output can be obtained.

In this embodiment, the level of the reproduced output 19 depends on the output energy level of the oscillator 14. Thus, a reproduced output signal having a sufficient level can be obtained with a satisfactory signal-to-noise ratio even with a small track width. Further, by reducing the thickness of the tungsten film 9 it is possible to increase the sensitivity of reproduction of signals recorded at high densities in the direction of the track length such as signals recorded by vertical magnetization recording. This permits super-high density recording and reproduction of signals, which have hitherto been impossible.

The magnetic layer 1b-2 noted previously may be readily reduced in thickness for it is formed as a surface layer of the magnetic tape 1. It is thus possible to increase the sensitivity of detection of the signal field. An oil film (not shown) may be formed on the surface of the magnetic layer 1b-2. The electrode 7 and magnetic layer 1b-2 are coupled to each other by the electrostatic capacitance due to the oil film.

Fig. 2 shows a further embodiment, which is used with the magnetic tape 1 only having the magnetic film 1b-1. Instead, a magnetic film 20 of a magnetic material similar to the layer 1b-2 is formed in lieu of the tungsten film 9 in the embodiment of Fig. 1 on one side of the stylus base 8 of stylus electrode 7. Like the embodiment of Fig. 1, a conductive film 10 is formed on the portion of magnetic film 20 other than a tip portion 20a thereof for the purpose of reducing the high frequency loss. In this embodiment, the high frequency characteristics of mainly the tip portion 20a of the magnetic film 20 are varied according to the signal field from the magnetic tape 1. The changes in the high frequency characteristics cause changes in the high frequency resonant circuit output voltage, these changes being similarly detected, whereby a reproduced output is obtained from the reproducing circuit 18.

Fig. 3 shows a modification of the stylus electrode 7 shown in Fig. 2. In this example, magnetic film 20 is sandwiched between opposite side conductor films 10a and 10b.

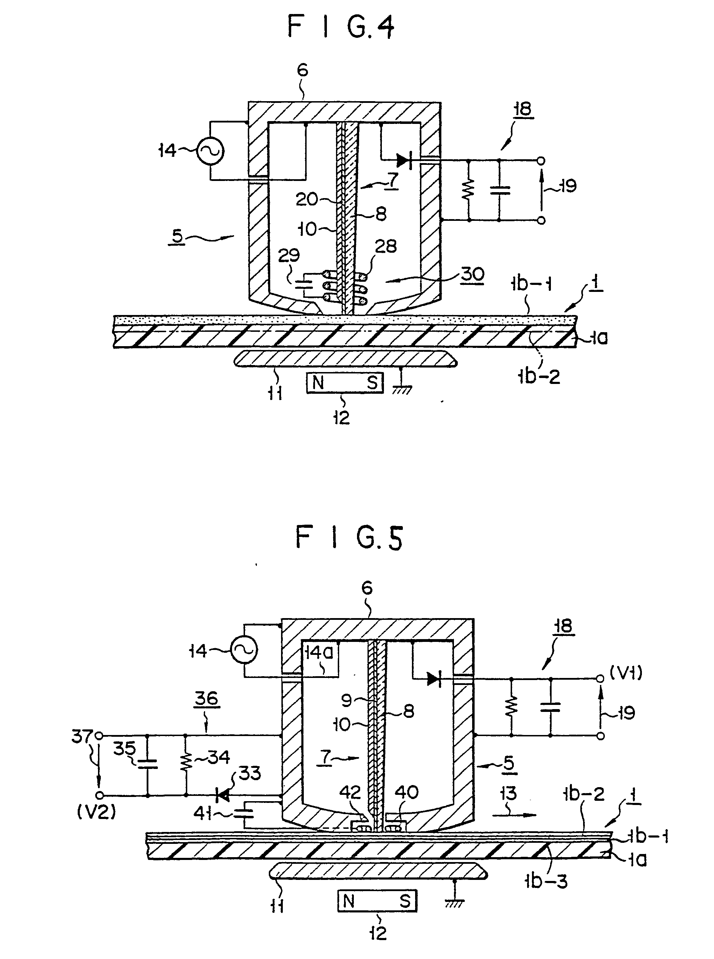

Fig. 4 shows a further embodiment, which includes an auxiliary resonant circuit 30. The auxiliary resonant circuit 30 has a coil 28 wound on stylus electrode 7 preferably in the neighborhood of the tip thereof, and a capacitor 29 connected in parallel with the coil 28. High frequency energy from oscillator 14 is supplied to the auxiliary resonant circuit 30 for resonance, thereby improving the sensitivity of reproduction. In this embodiment, a strong magnetic field that is produced with the high frequency energy supplied to the auxiliary resonant circuit 30 is applied along with the signal field from the magnetic tape 1 to the magnetic film 20. Therefore, changes in the high frequency loss due to the magnetic resonance absorption by the magnetic film are augmented to increase the reproduced output 19. Experiments conducted by the inventor prove that the reproduced output signal is improved by substantially 10 times as compared to the device without the auxiliary resonant circuit 30.

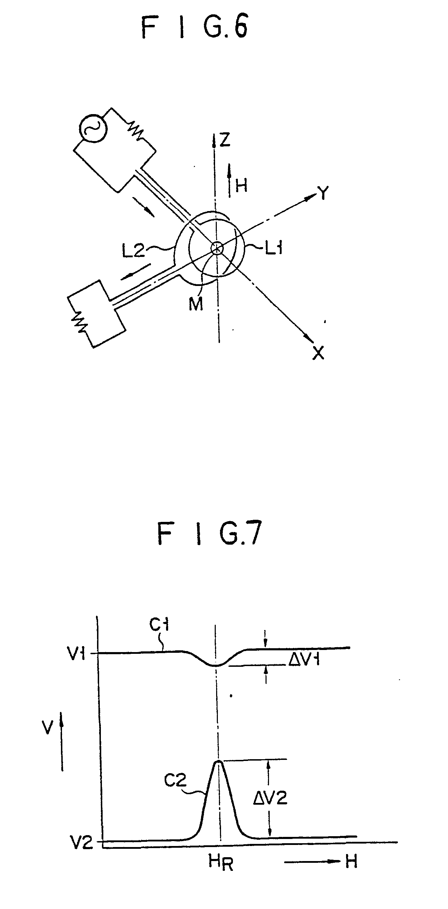

Instead of providing the conductor 11 on the side of the magnetic tape 1 opposite the stylus electrode 7, a conductive material may be incorporated in the tape 1. As a further alternative, a conductive layer 1b-3 may be provided in lamination with the magnetic recording film 1b-1 as shown in Fig. 5 to impart the tape 1 with conductivity. Where the magnetic tape 1 has a conductive surface, an insulating film such as an oil film may be provided on the conductive surface to avoid electric contact of the stylus electrode 7 with the conductive surface. The electrostatic capacitance that is provided by the insulating layer as an inter-layer dielectric may be included in a high frequency resonant circuit.

Fig. 5 shows a further embodiment. In this embodiment, a second coupling coil 40 is wound on a tip portion of the stylus electrode 7 which has the same structure as that in the embodiment of Fig. 1. The second coupling coil 40 has one end connected to the outer conductor 6 and the other end connected thereto through a resonant capacitor 41. It is substantially free from electric coupling to the coaxial resonator due to the presence of an electric shield 42 provided at the end of the outer conductor 6 adjacent to the tape 1.

The coaxial resonator and second coupling coil 40 constitute, along with input coupling coil 14a, a high frequency coupling circuit, in which the magnetic layer 1b-2 is a coupling element.

For reproducing the signal recorded on the magnetic tape 1, the reproducing head 5 is moved relative to the tape 1 in the direction of arrow 13 while supplying high frequency energy from the high frequency oscillator 14 to the high frequency coupling circuit through the input coupling coil 14a. The high frequency characteristics of the magnetic layer 1b-2, such as high frequency loss or magnetic permeability, vary according to the signal field from the magnetic tape 1. In particular, the relation between the signal field and frequency of the high frequency energy is suitably selected so as to cause magnetic resonance by the magnetic layer 1b-2 or the signal field. The tensor magnetic permeability is greatly varied by the magnetic resonance. With this magnetic resonance the magnetic film 1b-2 is coupled to the stylus electrode 7 and second coupling coil 40. In other words, the degree of electromagnetic coupling of the high frequency coupling circuit is increased from zero according to the signal field.

With the changes in the electromagnetic coupling degree of high frequency output appearing at the output of the coaxial resonator is modulated according to the signal field. The changes in the high frequency output are detected by the peak detecting circuit 36 comprised of a diode 33, resistor 34 and capacitor 35, whereby the reproduced output 37 can be obtained.

The principles of reproduction utilizing the magnetic resonance noteed above will now be discussed with reference to Fig. 6. The set-up of Fig. 6 has two loop coils L1 and L2 which are disposed such that their loop planes are normal to two perpendicular axes X and Y. A magnetic member M consisting of a magnetic resonance material (e.g., YIG) is disposed at the intersection of the axes X and Y. An external field H is applied to the magnetic member M in a direction Z parallel to both the loop coils L1 and L2, i.e., normal to the axes X and Y, while a microwave at the frequency of the magnetic resonance determined by the applied field is applied to the loop coil L1. Consequently, the magnetic moment of the magnetic member M causes a precession about the axes X and Y. The tensor permeability of the magnetic member M is thus increased on that the loop coil L1 is coupled to the other coil L2, whereby the microwave is transmitted from the former coil to the latter. It will be seen that the degree of coupling between both the loop coils L1 and L2 is varied according to the intensity of the field H.

Obviously, the reproduction of signals can be obtained by detecting the changes in the high frequency output voltage which correspond to the changes in the coupling degree of the high frequency coupling circuit. Fig. 7 shows the relation between the reproduced output voltage V and signal field H. A characteristic of curve C1 results without the second coupling coil 40, i.e., in case where changes in the coupling degree according to the signal field H are not utilized. Curve C2 represents the reproduction characteristics that are obtainable by utilizing the coupling degree changes with the signal field H. With the characteristic C1, the reproduced output level change corresponding to $H=H_R$ ($H_R$ being a field level that can cause magnetic resonance) with respect to output level V1 corrsponding to $H=0$ is $\Delta V1/V1$, whereas with the characteristic C2 the reproduced output level change corresponding to $H=H_R$ with respect to output level V2 corresponding to $H=0$ is $\Delta V2/V2$. The latter is far greater than the former. Where the coupling degree is not utilized, the resonator's Q must be increased to increase the reproduction sensitivity. This gives rise to noise due to variations of the resonant point of the resonator and mechanical vibrations of the recording medium, magnetic head and reproducing head. Also, the signal-to-niose ratio of the reproduced output is reduced with the reduction of the C/N of the high frequency output.

According to the embodiments of Figs. 1 to 5, especially the embodiment of Fig. 5, a large output can be obtained owing to the utilization of great changes of the coupling degree of the high frequency resonant circuit. In addition, the coaxial resonator constitutes a high frequency coupling circuit through a magnetic material capable of magnetic resonance, so that it is possible to reduce noise due to variations of the resonant point and mechanical vibrations and also to reduce the influence of the C/N of the high frequency output on the signal-to-noise ratio of the reproduced output.

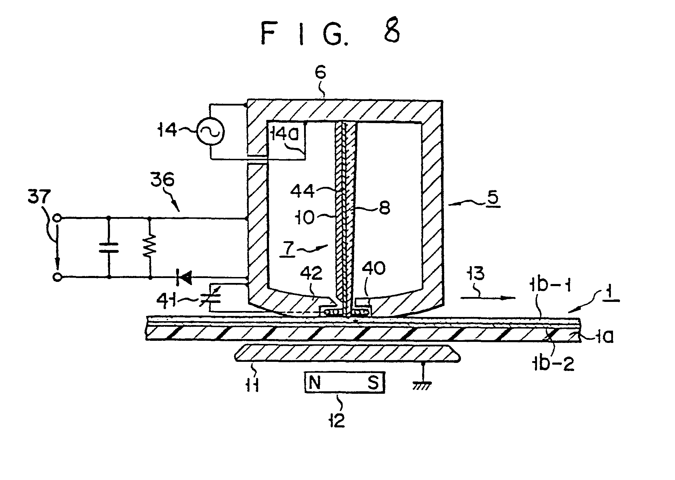

Fig. 8 shows a further embodiment. In this case, a magnetic tape 1 as shown in Fig. 4, having the magnetic layer 1b-2 whose high frequency characteristics are variable with the signal field, is used. In this embodiment the order of the film 1b-1 and the layer 1b-2 is reversed from that of the embodiment of Fig. 1. Also, a magnetic film 44 is formed in lieu of the tungsten film 9 on one side of the stylus substrate 8 of stylus electrode 7. Conductive film 10 is again formed on the surface of the magnetic film 44 other than at a tip portion thereof to reduce the high frequency loss. The signal field from the magnetic tape 1 causes changes in the high frequency characteristics of the magnetic layer 1b-2 and mainly the top portion of the magnetic film 44. With these changes the coupling degree of the high frequency coupling circuit is varied to vary the high frequency output voltage of the coaxial resonator. The changes in the high frequency output voltage are detected in the manner as described, whereby a reproduced output can be obtained from detecting circuit 36.

The embodiments of Figs. 5 and 8 are subject of EP—A—0 105 531.

## Claims

1. A magnetic reproducing system, in which a recorded signal is reproduced according to variations of high frequency characteristics of a magnetic material with a signal field in a magnetic recording medium (1) including a base layer (1a) and a magnetic recording layer (1b-1) formed on said base layer (1a) containing a first magnetic material magnetised according to the recorded signal, the system further comprising a second magnetic material of which at least one of permeability and high frequency loss changes with the variation of the magnetic signal field from the magnetic recording layer (1b-1), a high frequency coupling circuit (6, 7, 11) with a reproducing head (5) at the magnetic recording medium (1) the coupling degree of which varies with the changes in the high frequency characteristics of the magnetic material and means (18) for reproducing the signals according to the changes in the coupling degree of the high frequency coupling circuit (6, 7, 11), characterised in that the second magnetic material is formed as a magnetic layer (1b-2) of the magnetic recording medium (1), the reproducing head (5) is constituted by a cylindrical outer conductor (6) and a stylus electrode (7) as an inner conductor the tip of which projects from an open end (6a) of the outer conductor (6) to contact the magnetic layer (1b-2) and a conductor (11) serving as a grounding plate is provided on the side of the magnetic recording medium (1) opposite to the outer conductor (6) and stylus electrode (7).

2. A magnetic reproducing system according to the prior art portion of claim 1, characterised in that the reproducing head (5) is constituted by a cylindrical outer conductor (6) and a stylus electrode (7) as an inner conductor having a magnetic layer (20) is the second magnetic material the tip of the stylus electrode (7) projecting from an open end (6a) of the outer conductor to contact the magnetic recording medium (1) and a conductor (11) serving as a grounding plate is provided on the side of the magnetic recording medium (1) opposite to the outer conductor (6) and stylus electrode (7).

3. A system according to claim 1 or 2, characterized in that means (14, 14a) are provided for supplying high frequency energy to an input side of said high frequency coupling circuit (6, 7, 11), said high frequency energy having a frequency corresponding to a magnetic resonance frequency of said magnetic recording medium (1) and said reproducing head (5), and that the coupling degree of said high frequency coupling circuit (6, 7, 11) varies at said magnetic resonance frequency.

4. The system according to claim 3, characterized in that the high frequency coupling circuit (6, 7, 11) provides a low degree of electromagnetic coupling as an electric circuit in the absence of a signal, and provides a high degree of electromagnetic coupling with the magnetic resonance frequency.

5. The system according to claim 2, characterized in that said magnetic recording medium includes a conductive layer (1b-3).

6. The system according to claim 2, characterized in that said reproduction head (5) has a stylus electrode (7) including:
an insulating stylus base (8);
a magnetic film (9) provided on one side of said insulating stylus base (8) and having high frequency characteristics which are variable with a signal mganetic field on said magnetic recording medium (1); and
a conductive film (10) formed on the surface of said magnetic film (9) other than a portion thereof corresponding to the top of said stylus electrode (7).

7. The system according to claim 6, characterized in that said high frequency coupling circuit (6, 7, 11) includes an auxiliary resonant circuit (30) coupled to said stylus electrode (7);
that the auxiliary resonant circuit (30) resonates with said supplied high frequency energy, thereby a high frequency field generated by the resonance current flowing in said auxiliary resonant circuit (30) being supplied to said high frequency coupling circuit.

8. The system according to claim 7, characterized in that said auxiliary resonant circuit (30) comprises:
a coil (28) wound about said stylus electrode (7); and
a capacitor (29) connected to said coil (28).

## Patentansprüche

1. Magnetisches Wiedergabesystem, bei dem ein aufgezeichnetes Signal entsprechend Änderungen von Hochfrequenzeigenschaften eines magnetischen Materials reproduziert wird, die aufgrund eines Signalfelds in einen magnetischen Aufzeichnungsmedium (1) auftreten, welches eine Basisschicht (1a) und eine auf dieser ausgebildete magnetische Aufzeichnungsschicht (1b-1) aufweist, die ein erstes magnetisches Material enthält, das entsprechend dem aufgezeichneten Signal magnetisiert ist, wobei das System ferner umfaßt:
ein zweites magnetisches Material, dessen Permeabilität und/oder Hochfrequenzverlust sich mit der Änderung des magnetischen Signalfeldes von der magnetischen Aufzeichnungsschicht (1b-1) ändert, eine Hochfrequenzkoppelschaltung (6, 7, 11) mit einem Wiedergabekopt (5) an dem magnetischen Aufzeichnungsmedium (1), dessen Kopplungsgrad sich mit den Änderungen der Hochfrequenzeigenschaften des magtischen Materials ändert, und eine Einrichtung (18) zur Wiedergabe der Signale entsprechend den Änderungen des Kopplungsgrades der Hochfrequenzkoppelschaltung (6, 7, 11), dadurch gekennzeichnet, daß das zweite magnetische Material als magnetische Schicht (1b-2) des magnetischen Aufzeichnungsmediums (1) ausgebildet ist, daß der Wiedergabekopf (5) von einem zylindrischen Außenleiter (6) und einer Nadelelektrode (7) als Innenleiter, dessen Spitze aus einem offenen Ende (6a) des Außenleiters (6) zum Kontakt mit der magnetischen Schicht (1b-2) herausregt, gebildet ist, und daß ein als Erdungsplatte dienender Leiter (11) an der dem Außenleiter (6) und der Nadeleleketrode (7) entgegengesetzten Seite des magnetischen Aufzeichnungsmediums (1) vorgesehen ist.

2. Magnetisches Wiedergabesystem nach dem Oberbegriff des Patentanspruchs 1, dadurch gekennzeichnet, daß der Wiedergabekopf (5) von einem zylindrischen Außenleiter (6) und einer Nadelelektrode (7) als Innenleiter gebildet wird, die eine magnetische Schicht (20) als das zweite magnetische Material aufweist, wobei die Spitze der Nadelelektrode (7) von einem offenen Ende (6a) des Außenleiters zur Kontaktierung des magnetischen Aufzeichnungsmediums (1) herausragt und daß ein als Erdungsplatte dienender Leiter (11) an der dem Außenleiter (6) und der Nadelelektrode (7) entgegengesetzten Seite des magnetischen Aufzeichnungsmediums (1) vorgesehen ist.

3. System nach Anspruch 1 oder 2, dadurch gekennzeichnet, daß eine Einrichtung (14, 14a) zur Lieferung von Hochfrequenzenergie an die Eingangsseite der Hochfrequenzkoppelschaltung (6, 7, 11) vorgesehen ist, wobei die Hochfrequenzenergie eine Frequenz hat, die einer magnetischen Resonanzfrequenz des magnetischen Aufzeichnungsmediums (1) und des Wiedergabekopfes (5) entspricht, und daß der Kopplungsgrad der Hochfrequenzkoppelschaltung (6, 7, 11) mit der magnetischen Resonanzfrequenz variiert.

4. System nach Anspruch 3, dadurch gekennzeichnet, daß die Hochfrequenzkoppelschaltung (6, 7, 11) bei Abwesenheit eines Signals einen niedrigen Grad elektromagnetischer Kopplung als eine elektrische Schaltung aufweist, und bei der magnetischen Resonanzfrequenz einen hohen Grad elektromagnetischer Kopplung.

5. System nach Anspruch 2, dadurch gekennzeichnet, daß das magnetische Aufzeichnungsmedium eine leitende Schicht (1b-3) enthält.

6. System nach Anspruch 2, dadurch gekennzeichnet, daß der Wiedergabekopf (5) eine Nadelelektrode (7) aufweist, die enthält:

eine isolierende Nadelbasis (8),

einen auf einer Seite der isolierenden Nadelbasis (8) vogesehenen Magnetifilm (9), der Hochfrequenzeigenschaften hat, die mit einem Signalmagnetfeld an dem magnetischen Aufzeichnungsmedium (1) veränderbar sind, und

einen auf der Oberfläche des Magnetfilms (9) mit Ausnahme eines dem obersten Stück der Nadelelektrode (7) entsprechenden Teiles ausgebildeten leitenden Film (10).

7. System nach Anspruch 6, dadurch gekennzeichnet, daß die Hochfrequenzkoppelschaltung (6, 7, 11) einen mit der Nadelelektrode (7) gekoppelten Hilfsresonanzkreis (30) enthält, der mit der zugeführten Hochfrequenzenergie schwingt, wodurch ein Hochfrequenzfeld, das durch den in dem Hilfsresonanzkreis (30) fließenden Resonanzstrom erzeugt wird, an die Hochfrequenzkoppelschaltung geliefert wird.

8. System nach Anspruch 7, dadurch gekennzeichnet, daß der Hilfsresonanzkreis (30) eine um die Nadelelektrode (7) gewickelte Spule (28) und einen mit der Spule (28) verbundenen Kondensator (29) aufweist.

**Revendications**

1. Système de reproduction magnétique, dans lequel un signal enregistré est reproduit en fonction des variations des caractéristiques à haute fréquence d'un matériau magnétique avec un champ d'un signal dans un support d'enregistrement magnétique (1) comprenant une couche de base (1a) et une couche d'enregistrement magnétique (1b-1) formée sur ladite couche de base (1a), contenant un premier matériau magnétique magnétisé en fonction de signal enregistré, le système comportant en outre un second matériau magnétique dont au moins l'une de la perméabilité et de la perte à haute fréquence varie avec la variation du champ du signal magnétique provenant de la couche d'enregistrement (1b-1), un circuit de couplage à haute fréquence (6, 7, 11) avec une tête de reproduction (5) avec le support d'enregistrement magnétique (1) dont le degré de couplage varie avec des variations des caractéristiques à haute fréquence du matériau magnétique et un dispositif (18) destiné à reproduire les signaux en fonction des variations du degré de couplage du circuit de couplage à haute fréquence (6, 7, 11), caractérisé en ce que le second matériau magnétique est formé comme une couche magnétique (1b-2) du support d'enregistrement magnétique (1), la tête de reproduction (5) est constituée par un conducteur extérieur cylindrique (6) et une électrode (7) en forme de style comme conducteur intérieur dont l'extrémité fait saillie par une extrémité ouverte (6a) du conducteur extérieur (6) pour venir en contact avec la couche magnétique (1b-2) et un conducteur (11) servant de plaque de masse étant prévu sur la face du support d'enregistrement magnétique (1) opposée au conducteur extérieur (6) et une électrode (7) en forme de style.

2. Système de reproduction magnétique selon la partie antérieure de la revendication 1, caractérisé en ce que la tête de reproduction (5) est constituée par un conducteur extérieur cylindrique (6) et une électrode (7) en forme de style comme conducteur intérieur, portant une couche magnétique (20) comme le second matériau magnétique, l'extrémité de l'électrode (7) en forme de style faisant saillie par une extrémité ouverte (6a) du conducteur extérieur pour venir en contact avec le support d'enregistrement magnétique (1) et un conducteur (11) servant de plaque de masse étant prévu sur la face du support d'enregistrément magnétique (1) opposée au conducteur extérieur (6) et à l'électrode (7) en forme de style.

3. Système selon la revendication 1 ou 2, caractérisé en ce que un dispositif (14, 14a) est prévu pour fournir de l'énergie à haute fréquence à un côté d'entrée dudit circuit de couplage à haute fréquence (6, 7, 11), ladite énergie à haute fréquence ayant une fréquence correspondant à une fréquence de résonance magnétique dudit support d'enregistrement magnétique (1) et de ladite tête de reproduction (5) et en ce que le degré de couplage dudit circuit de couplage à haute fréquence (6, 7, 11) varie à ladite fréquence de résonance magnétique.

4. Système selon la revendication 3, caractérisé en ce que le circuit de couplage à haute fréquence (6, 7, 11) apporte un faible degré de couplage électromagnètique comme un circuit électrique en l'absence d'un signal et produit un degré élevé de couplage électromagétique avec la fréquence de résonance magnétique.

5. Système selon la revendication 2, caractérisé en ce que ledit support d'enregistrement magnétique comporte une couche conductrice (1b-3).

6. Système selon la revendication 2, caractérisé en ce que ladite tête de reproduction (5) comporte une électrode (7) en forme de style, comprenant:
   une base isolante (8) en forme de style,
   une pellicule magnétique (9) prévue sur une face de la base isolante (8) en forme de style et ayant des caractéristiques à haute fréquence qui sont variables avec un champ magnétique de signal sur ledit support d'enregistrement magnètique (1), et
   une pellicule conductrice (10) formée sur la surface de ladite pellicule magnétique (9) ailleurs qu'une partie qui correspond à l'extrémité de ladite électrode (7) en forme de style.

7. Système selon la revendication 6, caractérisé en ce que ledit circuit de couplage à haute fréquence (6, 7, 11) comporte un circuit résonant auxiliaire (30) couplé avec ladite électrode (7) en forme de style,
   en ce que ledit circuit résonant auxiliaire (30) résonne avec ladite énergie à haute fréquence fournie de manière qu'un champ de fréquence élevée produit par le courant à la résonance circulant dans le circuit résonant auxiliaire (30) soit fourni audit circuit de couplage à haute fréquence.

8. Système selon la revendication 7, caractérisé en ce que ledit circuit résonant auxiliaire (30) comporte:
   un enroulement (28) enroulé autour de ladite électrode (7) en forme de style et
   un condensateur (29) connecté audit enroule- ment (28).

# F I G. 1

# F I G. 2

# F I G. 3

# F I G.4

# F I G.5

# F I G.6

# F I G.7

# F I G.  8